# EUROPEAN PATENT APPLICATION

(11) **EP 4 435 403 A1**
(43) Date of publication of application: **25.09.2024**
(21) Application number: 23863399.4
(22) Date of filing: 30.08.2023
(51) Int. Cl.: G01M 13/003, F16K 37/00

(54) **DIRECTION CHANGE VALVE MALFUNCTION PREDICTION SYSTEM AND MALFUNCTION PREDICTION METHOD, AND DIRECTION CHANGE VALVE MALFUNCTION INSPECTION SYSTEM AND INSPECTION METHOD**

(30) Priority: 05.09.2022 KR 20220112023
(71) Applicant: LG Energy Solution, Ltd., Seoul 07335 (KR)
(72) Inventor: WON, Young Sik, Daejeon 34122 (KR); LEE, Jun Ho, Daejeon 34122 (KR)
(74) Representative: Goddar, Heinz J.
(86) International application number: PCT/KR2023/012853
(87) International publication number: WO 2024/053923

(57) **Abstract**

A direction change valve failure prediction system of the present technology includes: a data obtainer configured to repeatedly detect operation times of a plurality of direction change valves over an equipment operation elapsed time to obtain operation time data of each of the plurality of direction change valves, the plurality of direction change valves being configured to communicate with a cylinder including a piston rod to change a direction in which a working fluid is supplied to the cylinder to change an operation direction of the piston rod; a degradation index value calculator configured to calculate degradation index values of a plurality of statistical degradation indexes representing a failure of the direction change valves on the basis of the operation time data; and a determiner configured to sequence the degradation index values of the statistical degradation indexes, which are calculated for each of the plurality of direction change valves, according to size, give scores to direction change valves of higher values that are within or beyond a predetermined range among the sequenced degradation index values, and determine a direction change valve that is expected to fail on the basis of the sum of the scores.

## Description

### [Technical Field]

The present invention relates to a direction change valve failure prediction system and method.

In addition, the present invention also relates to a direction change valve failure inspection system and method for inspecting and replacing a direction change valve whose failure is predicted by the direction change valve failure prediction system and method.

This application claims the benefit of priority based on Korean Patent Application No. 10-2022-0112023, filed on September 5, 2022, and the entire content of the Korean patent application is incorporated herein by reference.

### [Background Art]

Recently, rechargeable secondary batteries have been widely used as energy sources of wireless mobile devices. Secondary batteries also have attracted attention as energy sources of electric vehicles, hybrid electric vehicles, etc. that have been introduced as a solution to air pollution due to existing gasoline vehicles and diesel vehicles using fossil fuel. Therefore, the types of applications using a secondary battery are diversifying due to the advantages of secondary batteries, and secondary batteries are expected to be applied to more fields and products in the future.

To manufacture such a secondary battery, a number of detailed processes, such as a process of coating a current collector with an active material and rolling the current collector to form a positive electrode and a negative electrode, which are components, a notching process of forming an electrode tab, an electrode assembly manufacturing process of manufacturing an electrode assembly by stacking and/or folding the positive electrode, a separator, and the negative electrode, a welding process for welding the electrode tab and electrode leads, a process of cutting the electrode assembly into a stack, and a charging/discharging process of giving characteristics before shipping, are performed. In each of the processes, various types of actuators are used to operate materials, various types of detailed devices, or other systems.

The actuators are devices for driving movable elements such as devices, and include a motor, a cylinder, and the like. Among the actuators, the cylinder includes a cylindrical cylinder body and a piston rod accommodated in the cylinder body and provided with a piston at a front end thereof, and applies a driving force to a movable element through linear movement of the piston rod in the cylinder body. Meanwhile, the linear movement of the piston rod may be performed using the pressure (hydraulic pressure or pneumatic pressure) of a working fluid supplied from the outside. That is, when the working fluid (oil or air) is supplied to the cylinder body from a working fluid source, the piston rod is moved linearly by the pressure of the supplied working fluid. Here, a direction in which the piston rod is moved linearly may be changed by changing a direction in which the working fluid is supplied. A direction change valve is used as a device for changing the direction in which the working fluid is supplied.

The direction change valve is a valve disposed in a flow path to change a direction in which the working fluid flows. The direction change valve includes a plurality of ports in which flow paths through which a working fluid is introduced or discharged are formed, a case in which the plurality of ports are installed and an internal flow path communicating with the flow paths of the plurality of ports are formed, a spool disposed in the internal flow path of the case to close or open the plurality of ports and partially block the internal flow path to control a direction in which a working fluid flows, and a spool driving part for supplying a driving force to the spool to allow the spool to be moved in the internal flow path in the case. The direction change valve communicates with the working fluid source and the cylinder body through the ports to form a flow path, and the spool blocks some of the ports and partially block the internal flow path when the working fluid flows through the flow path to determine a direction in which the working fluid source will flow.

When the cylinder, the piston rod, and the direction change valve malfunction, a movable element cannot be moved by a set value, thus causing abnormal operation of a factory production line and a defect in products. In particular, when serious malfunction occurs in the cylinder, the piston rod, or the direction change valve, some or all parts of a manufacturing system of a factory may break down.

Attempts have been made to predict a failure of the cylinder so as to prevent an interruption of an operation the manufacturing system of the factory before the cylinder breaks down. However, when the direction change valve for changing a direction in which a working fluid flows breaks down, the cylinder may be determined erroneously as breaking down even when the cylinder is in a normal state. Therefore, in order to fundamentally prevent an interruption of an operation of the manufacturing system of the factory, it is necessary to detect a sign of abnormality or failure of the direction change valve in advance before the direction change valve breaks down.

Conventionally, abnormality in a valve is detected by comparing the number of times of individually supplying an opening/closing operation signal to a valve and the number of times of actually opening or closing the valve (Patent Document 1). However, the opening or closing of the valve can be performed even when an operation is delayed due to abnormality or a failure of the valve. That is, an error may occur when abnormality in the valve is detected and predicted on the basis of the number of times of opening or closing the valve. Therefore, there is a need for a technique for selecting a factor or index representing malfunction or failure of the valve and predicting a failure of the valve on the basis of the factor or index.

### [Related Art Document]

### (Patent Document)

(Patent Document 1) Japanese Patent Laid-Open Publication No. 2013-168131

### [Disclosure]

### [Technical Problem]

To address the above-described problem, the present invention is directed to providing a direction change valve failure prediction system and method for selecting statistical degradation indexes representing a failure of a direction change valve and predicting a failure of the direction change valve on the basis of the degradation indexes before the direction change valve breaks down.

In addition, the present invention is also directed to providing a direction change valve failure inspection system and method for inspecting and replacing a direction change valve whose failure is predicted by the direction change valve failure prediction system and method.

### [Technical Solution]

According to an aspect of the present invention, a direction change valve failure prediction system includes: a data obtainer configured to repeatedly detect operation times of a plurality of direction change valves over an equipment operation elapsed time to obtain operation time data of each of the plurality of direction change valves, the plurality of direction change valves being configured to communicate with a cylinder including a piston rod to change a direction in which a working fluid is supplied to the cylinder to change an operation direction of the piston rod; a degradation index value calculator configured to calculate degradation index values of a plurality of statistical degradation indexes representing a failure of the direction change valves on the basis of the operation time data; and a determiner configured to sequence the degradation index values of the statistical degradation indexes, which are calculated for each of the plurality of direction change valves, according to size, give scores to direction change valves of higher values that are within or beyond a predetermined range among the sequenced degradation index values, and determine a direction change valve that is expected to fail on the basis of the sum of the scores.

As a concrete example, the data obtainer may obtain data by selecting, as an operation time of the direction change valve, at least one of a first time required for the piston rod to start moving forward according to an operation signal of the direction change valve, a second time required for the piston rod to start moving backward according to an operation signal of the direction change valve, and the sum of the first time and the second time.

As a more concrete example, the data obtainer may regard each of the first time and the second time as a separate piece of independent operation time data, and obtain two pieces of operation time data of the first time and the second time during a reciprocating operation of a piston rod included in one cylinder.

For example, the statistical degradation indexes may include two or more statistical degradation indexes selected from the group consisting of a mean, standard deviation, a first quartile, a median, a third quartile, skewness, and kurtosis of the operation time data of each of the plurality of direction change valves.

As another example, the statistical degradation indexes may include at least one statistical degradation index selected from the group consisting of a mean, standard deviation, a first quartile, a median, a third quartile, skewness, and kurtosis of the operation time data of each of the plurality of direction change valves, and a change value of the at least one statistical degradation index selected from the group.

For example, the degradation index values of the statistical degradation indexes may be calculated on the basis of operation time data of each direction change valve operated for a specific time period after repetitive use of the direction change valve for a predetermined time period.

As a concrete example, in an inspection target period including a plurality of unit time periods, the data obtainer may group operation time data of each of the direction change valves into an individual operation time data group for each of the unit time periods, and the degradation index value calculator may calculate degradation index values of each of the direction change valves on the basis of the individual operation time data group.

For example, the determiner may sequence last-period degradation index values, which are calculated on the basis of an operation time data group of the direction change valves operated for a specific unit time period after predetermined unit time periods of the inspection target period, with respect to each of the plurality of direction change valves, give scores to direction change valves of higher values that are within or beyond a predetermined range among the sequenced last-period degradation index values, and determine a direction change valve that is expected to fail on the basis of the sum of the scores.

As another example, the determiner may sequence average last-period degradation index values, which are calculated by averaging last-period degradation index values calculated on the basis of operation time data groups of the direction change valves operated for specific unit time periods after predetermined unit time periods of the inspection target period, with respect to each of the plurality of direction change valves, give scores to direction change valves of higher values that are within a predetermined range among the sequenced average last-period degradation index values, and determine a direction change valve that is expected to fail on the basis of the sum of the scores.

As another example, a difference value calculated by subtracting the last-period degradation index value from either an initial degradation index value calculated on the basis of an operation time data group of an initial unit time period of the inspection target period or an average of initial degradation index values calculated on the basis of operation time data groups in initial unit time periods may be employed as an additional statistical degradation index representing a failure of a direction change valve.

As another example, difference values calculated by subtracting the average last-period degradation index values from either an initial degradation index value calculated on the basis ofan operation time data group of an initial unit time period of the inspection target period or an average of initial degradation index values calculated on the basis ofoperation time data groups in initial unit time periods may be employed as additional statistical degradation indexes representing a failure of a direction change valve.

According to another aspect of the present invention, a direction change valve failure inspection system includes the direction change valve failure prediction system, and an inspection part configured to measure whether air leaks from a direction change valve determined by the determiner as a direction change valve that is expected to fail.

According to another aspect of the present invention, a direction change valve failure prediction method includes: obtaining operation time data of each of a plurality of direction change valves by repeatedly detecting operation times of the plurality of direction change valves over an equipment operation elapsed time, the plurality of direction change valves being configured to communicate with a cylinder including a piston rod to change a direction in which a working fluid is supplied to the cylinder to change an operation direction of the piston rod; selecting a plurality of statistical degradation indexes representing a failure of the direction change valves and calculating degradation index values of the selected statistical degradation indexes on the basis of the operation time data; sequencing the degradation index values according to size with respect to the direction change valves; and giving scores to direction change valves of higher values that are within or beyond a predetermined range among the sequenced degradation index values and determining a direction change valve that is expected to fail on the basis of the sum of the scores.

As a concrete example, a change value of at least one statistical degradation index selected from among the plurality of statistical degradation indexes may be employed as an additional statistical degradation index for determination of a direction change valve that is expected to fail.

According to another aspect of the present invention, a direction change valve failure inspection method includes inspecting a direction change valve determined as a direction change valve that is expected to fail by the direction change valve failure prediction method, and replacing the direction change valve whose failure is detected by the inspecting of the direction change valve.

### [Advantageous Effects]

According to the present invention, a failure of a direction change valve that is likely to break down can be predicted and replaced in advance before the direction change valve breaks down. Therefore, the breakdown of a factory or an entire manufacturing system can be prevented by removing a direction change valve that is expected to fail in advance.

Before predicting a failure of a cylinder, a failure of the direction change valve, which is a source of motive power for driving the cylinder, can be predicted to reduce errors in determining a failure of the cylinder. A time required to predict a failure can be greatly reduced by predicting a failure of a direction change valve of operation time data much shorter than that during the prediction of a failure of the cylinder.

According to the present invention, abnormality of the direction change valve can be more accurately predicted by statistically calculating abnormality of an operation time that represents a failure of the direction change valve.

In addition, according to the present invention, the number of direction change valves to be inspected can be significantly reduced, thus greatly reducing manpower, workload, and working hours required for maintenance.

### [Brief Description of the Drawings]

FIG. 1 is a schematic view illustrating a linear movement of a piston rod when a direction in which a working fluid is supplied is changed by a direction change valve.
FIG. 2 is a schematic view of points on a direction change valve at which a failure occurs.
FIG. 3 is a graph showing cumulative operation time distributions of a normal direction change valve and an abnormal direction change valve.
FIG. 4 is a block diagram illustrating the concept of a failure occurrence prediction according to the present invention.
FIG. 5 is a schematic view of a direction change valve failure prediction system according to an embodiment of the present invention.
FIG. 6 is a graph showing a state in which operation time data of a direction change valve is grouped and statistically visualized.
FIG. 7 is a schematic diagram illustrating a failure prediction mechanism using a direction change valve failure prediction system according to an embodiment of the present invention.
FIG. 8 is a schematic diagram illustrating examples of statistical degradation indexes based on an operation time of a direction change valve.
FIG. 9 is a schematic diagram illustrating a failure prediction mechanism using a direction change valve failure prediction system according to a modified example of an embodiment of the present invention.
FIG. 10 is a schematic view of a direction change valve failure prediction system according to another embodiment of the present invention.
FIG. 11 is a schematic diagram illustrating a change in statistical degradation indexes.
FIGS. 12 and 13 are schematic diagrams illustrating failure prediction mechanisms using a direction change valve failure prediction system according to another embodiment of the present invention.
FIG. 14 is a schematic view of a direction change valve failure inspection system according to an embodiment of the present invention.

### [Best Mode]

Hereinafter, the present invention will be described in detail. First, the terms or expressions used in the present specification and claims should not be construed as being limited to as generally understood or as defined in commonly used dictionaries, and should be understood according to meanings and concepts matching the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more other features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

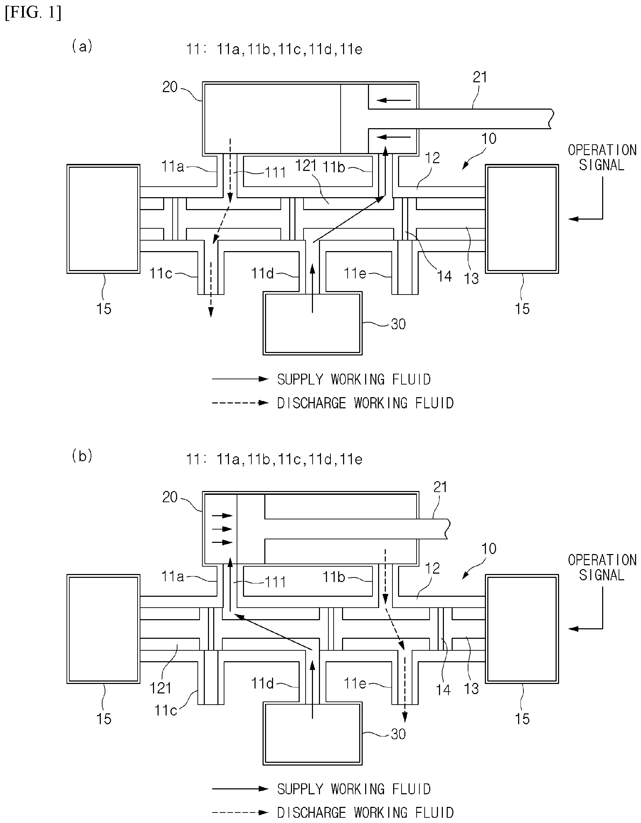

FIG. 1 is a schematic view illustrating a linear movement of a piston rod when a direction in which a working fluid is supplied is changed by a direction change valve.

Referring to (a) and (b) of FIG. 1, the direction change valve 10 is in communication with the working fluid source 30 and the cylinder 20, and changes a direction in which the working fluid is to be supplied to a cylinder 20 from a working fluid source 30. The working fluid may be oil or air, and the working fluid source 30 may be a fluid storage tank, a pump, or the like. The direction change valve 10 includes a plurality of ports 11 in which flow paths 111 through which a working fluid is introduced or discharged are formed, a case 12 in which the plurality of ports 11 are installed and an internal flow path 121 communicating with the flow paths of the plurality of ports 11 is formed, a spool 13 disposed in the inner flow path 121 of the case 12 to close or open the plurality of ports 11 and partially block the internal flow path 121 to control a direction in which the working fluid flows, and a spool driving part 15 for supplying a driving force to the spool 13 so that the spool 13 may be movable in the internal flow path 121 of the case 12. The spool 13 may include a packing 14 for shielding.

The spool driving part 15 may include a solenoid coil and a movable plunger operated by the solenoid coil. Alternatively, the spool driving part 15 may include a solenoid coil and a pilot valve that is opened or closed by a movable plunger to supply a high-pressure fluid to the spool 13. The both cases are the same in that the movable plunger moves linearly by a magnetic field generated by the solenoid coil. However, in the former case, the movable plunger is directly connected to the spool 13 so that the spool 13 is operates by the linear movement of the movable plunger, whereas in the latter case, the spool 13 is operated by the pressure of a high-pressure fluid introduced through the pilot valve when the pilot valve is opened by the movable plunger. The spool driving part 15 may be disposed on one end or both ends of the case 12. When the spool driving part 15 is disposed only on one end of the case 12, an elastic body (not shown) such as a spring may be disposed on another end of the case 12. In this case, the spool 13 may be moved toward the elastic body while resisting pressure applied by the elastic body when the spool driving part 15 is turned on by an on-operation signal automatically or manually generated by a controller. Conversely, when the spool driving part 15 is turned off by an off-operation signal from the controller or the like, the spool 13 may be moved toward the spool driving part 15 due to a restoring force of the elastic body. The operation signal is an electrical signal applied to the solenoid coil by the controller.

(a) of FIG. 1 is a schematic view of a forward movement of a piston rod 21 by an operation of a direction change valve 10 with five ports 11a to 11e. First, an operation signal is applied to the spool driving part 15 to move the spool 13 to the left on the internal flow path 121. The spool driving part 15 may be operated remotely according to automation or be directly operated by an operator for device inspection or maintenance. When the spool driving part 15 is operated remotely, the operation signal may be a remote signal applied to the spool driving part 15 through a process controller (not shown). When the spool driving part 15 is directly operated by an operator, the operation signal may be a valve power on/off operation performed by the operator. Meanwhile, when the movement of the spool 13 is completed, a working fluid flows from the fourth port 11d to the second port 11b as a direction in which the working fluid flows is regulated by the spool 13. The piston rod 21 moves forward as the piston rod 21 is pressed to the left due to the supply of the working fluid through the second port 11b. In the present invention, an operation time of a direction change valve should be understood as changing a direction in which a working fluid is supplied in response to the start of an operation time and maintaining the changed direction until the working fluid is sufficiently supplied to provide a piston rod with hydraulic pressure for making a linear movement.

In the present specification, the operation time of the direction change valve or a time required to operate the direction change valve should be understood to mean a time required to apply hydraulic pressure sufficient to drive a spool and change a direction of a piston rod, starting from the application of an operation signal to the spool driving part.

(b) of FIG. 1 is a schematic view of a backward movement of the piston rod 21 by an operation of the direction change valve 10 with the five ports 11a to 11e. First, an operation signal is applied to the spool driving part 15 to move the spool 13 to the right on the internal flow path 121. When the movement of the spool 13 is completed, a working fluid flows from the fourth port 11d to the first port 11a as a direction in which the working fluid flows is regulated by the spool 13. The piston rod 21 moves backward as the piston rod 21 is pressed to the right due to the supply of the working fluid through the first port 11a.

The left-to-right movement of the spool 13 is only an example, and the piston rod 21 may move backward when the spool 13 moves to the left according to the design of the direction change valve. For convenience of description, (a) and (b) of FIG. 1 have been described above with respect to the direction change valve 10 with the five ports 11a to 11e but the present invention is not necessarily limited thereto.

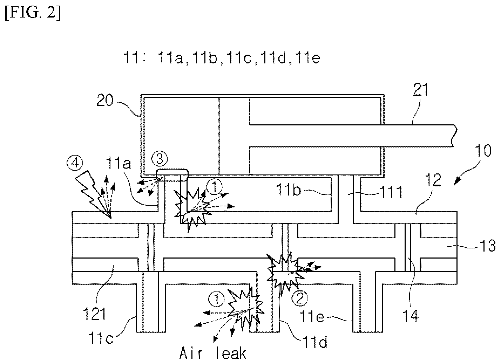

FIG. 2 is a schematic view of points on the direction change valve 10 at which a failure occurs.

As shown in FIG. 2, main causes of failures of the direction change valve 10 may be classified into ① the leakage of a working fluid due to damage to the port 11, ② the leakage of the working fluid due to the deterioration of the packing 14 of the spool 13, ③ the leakage of the working fluid due to a defect in the fastening of the cylinder 20 or the working fluid source 30 and the direction change valve 10, ④ the leakage of the working fluid due to damage to the case 12, and the like. Even when leakage as described above occurs, a switching operation (or an opening/closing operation) of the direction change valve may be performed. However, when the working fluid leaks as described above, the working fluid should be additionally supplied to achieve a level of pressure for moving the piston rod 21. Therefore, even when an operation signal is applied to the spool drive part 15, the movement of the piston rod 21 does not start until the working fluid is additionally supplied. That is, the deterioration of the operation of the direction change valve 10 may be expressed as a delay in starting the operation of the piston rod 21.

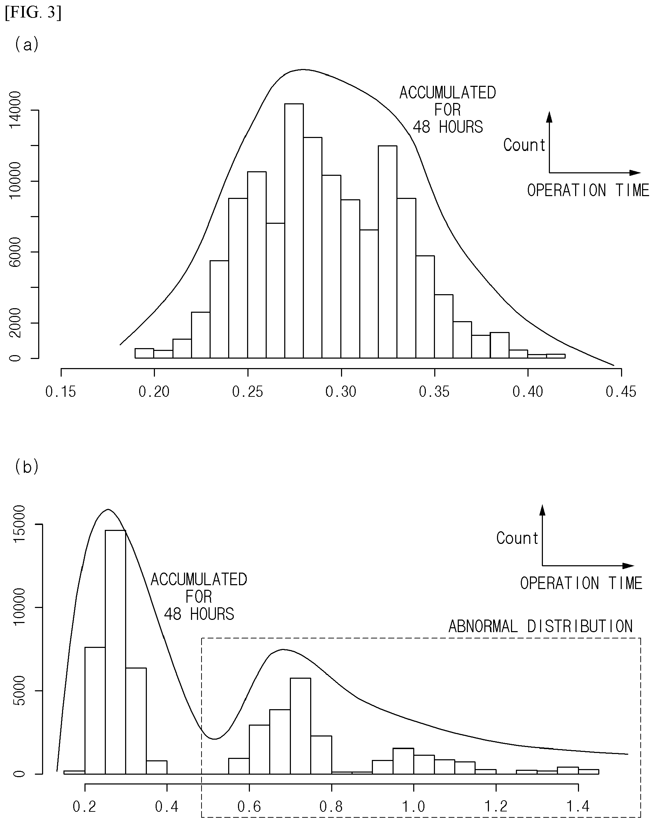

FIG. 3 is a graph showing operation time distributions of a normal direction change valve and an abnormal direction change valve.

(a) of FIG. 3 is a graph showing the number of times that an operation time of a normal direction change valve is measured for a predetermined time period. As shown in (a) of FIG. 3, the normal direction change valve shows a normal distribution curve in a normal range (about 0.2 seconds to 0.5 seconds). In contrast, FIG. (b) of 3 is a graph showing the number of times that an operation time of an abnormal direction change valve is measured for a predetermined time period. As shown in (b) of FIG. 3, the abnormal direction change valve shows an abnormal distribution curve in a range (exceeding about 0.5 seconds), which is not within the normal range. As described above, an operation time of a direction change valve is closely related to the degradation of the operation of the direction change valve. The present invention is characterized in that an operation time of a direction change valve is selected as a factor representing a failure of the direction change valve, statistical degradation indexes and values of the statistical degradation indexes are calculated on the basis of data of the operation time of the direction change valve, and whether the direction change valve will break down is predicted using the values of the degradation indexes. The statistical degradation indexes are based on the data of the operation time representing a failure of the direction change valve and thus may also represent a failure of the direction change valve. In this respect, the present invention differs from the related art in which a failure of a direction change valve is diagnosed simply by the number of times of opening or closing the direction change valve.

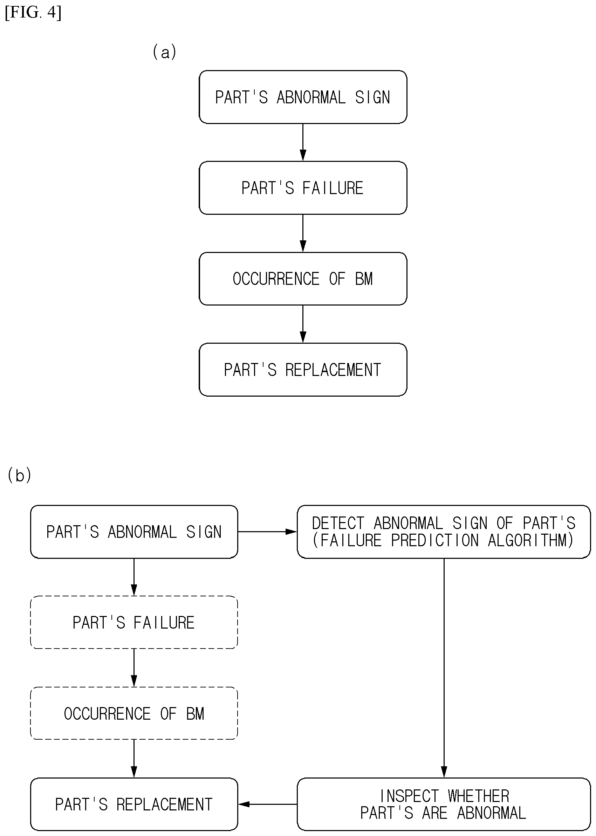

FIG. 4 is a block diagram illustrating the concept of a failure occurrence prediction according to the present invention.

As shown in (a) of FIG. 4, parts of a direction change valve show abnormal signs before a failure occurs. If a failure of the parts can not predicted from the abnormal signs, a failure will eventually occur, thus resulting in breakdown (BM) of some or all parts of a manufacturing system of a factory. Replacing the parts with other parts after the breakdown is very uneconomical and reduces manufacturing efficiency.

In contrast, according to the present invention, an abnormal sign can be detected in advance by a direction change valve failure prediction system or method using a direction change valve failure prediction algorithm of the present invention when there is an abnormal sign of parts of a direction change valve, as shown in (b) of FIG. 3. That is, a defective part of a direction change valve can be replaced with another by predicting a failure of the direction change valve to check whether parts of the direction change valve are abnormal or not in advance before a failure occurs, thereby preventing the breakdown of the system, unlike in the related art. The technical idea of the present invention is to predict a direction change valve that is expected to fail or is likely to fail before the failure of the direction change valve rather than diagnosing whether a fail has occurred in the direction change valve or analyzing the cause of the failure. Therefore, not only a failure direction change valve even a normal direction change valve may be determined as a direction change valve that is expected to fail. In this respect, the present invention is differentiated from the related art for diagnosing a failure or determining only whether a direction change valve is normal.

### [Embodiments of the Present Invention]

The present invention will be described in detail below.

### (First Embodiment)

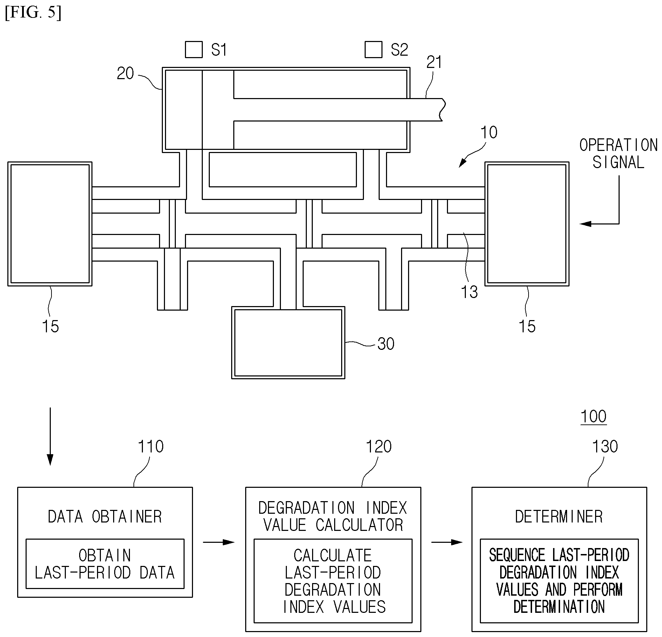

FIG. 5 is a schematic view of a direction change valve failure prediction system according to an embodiment of the present invention.

A direction change valve failure prediction system 100 of the present invention includes: a data obtainer 110 configured to repeatedly detect operation times of a plurality of direction change valves 10, which communicate with a cylinder 20 including a piston rod 21 to change an operation direction of the piston rod 21 by changing a direction in which a working fluid is supplied to the cylinder 20, for an equipment operation elapsed time to obtain a plurality of pieces of operation time data of each of the direction change valves 10; a degradation index value calculator 120 configured to calculate degradation index values of statistical degradation indexes representing a failure of the direction change valves 10 on the basis of the operation time data; and a determiner 130 configured to sequence the degradation index values calculated for the direction change valves 10 according to size and determine a direction change valve 10 of higher values that are within or beyond a predetermined range among the sequenced degradation index values as a direction change valve 10 that is expected to fail.

An operation time of a direction change valve 10 described in the present invention includes at least one of a first time required for the piston rod 21 to start moving forward as a direction in which a working fluid is supplied is changed according to an operation signal of the direction change valve 10, a second time required for the piston rod 21 to start moving backward as the direction in which the working fluid is supplied is changed according to an operation signal of the direction change valve 10, and the sum of the first time and the second time. As shown in FIG. 2, when an operation of the direction change valve 10 deteriorates, not only the first time required for the piston rod 21 to start moving forward and the second time required for the piston rod 21 to start moving backward but also the sum of the first time and the second time are delayed. Therefore, not only the first time and the second time but also the sum of the first and second times, a combination of the first time and the sum of the first and second times, or a combination of the second time and the sum of the first and second times may be operation time data which is a basis for calculating the degradation index values. In the present embodiment, for convenience of calculation, each of the first time and the second time is considered as a piece of separate and independent operation time data. That is, generally, time when the piston rod 21 starts moving forward and time when the piston rod 21 starts moving backward are substantially the same due to the direction change valve and thus first time data and second time data are obtained during a reciprocating operation of the piston rod 21 are regarded as separate pieces of data. Accordingly, two pieces of operation time data may be obtained during the reciprocating operation of one piston rod 21. For example, when it is assumed that there are fifty direction change valves that are failure prediction targets, each of the direction change valves should be operated twice for a reciprocating motion of a piston rod of each cylinder and thus 100 pieces of operation time data may be obtained during the reciprocating motion of each piston rod. That is, in the present embodiment, each of the first time and the second time is regarded as a piece of statistical data to determine a direction change valve that is expected to fail. Alternatively, only the first or second time may be obtained as operation time data to predict a failure. However, when data of both the first time and the second times is obtained, the data includes data about all operations of the direction change valve related to the reciprocating motion of the piston rod 21 and thus it is possible to more accurately determine the direction change valve, thereby more accurately determining a failure of the direction change valve and increasing failure predictability.

The operation time data may be obtained, for example, by sensors S 1 and S2 installed at a front end and rear end of a housing of the cylinder 20 as shown in FIG. 5. The sensor S 1 installed at the rear end detects the arrival of the piston rod 21 on the front end. Similarly, the sensor S 1 detects the departure of the piston rod 21 from the front end. The sensor S2 installed at the front end detects the arrival of the piston rod 21 on the rear end. Similarly, the sensor S2 detects the departure of the piston rod 21 from the rear end. The sensors may be installed inside or outside the cylinder. The sensors may be, for example, limit switches turned on or off to indicate the position of a piston on the front end of the piston rod.

The data obtainer 110 may obtain, as operation time data, a time elapsed from when an operation signal is applied to the spool driving part 15 to when the sensors S 1 and S2 detect the departure of the piston rod 21. For example, a time elapsed from when the operation signal is applied to the spool driving part 15 to when a piston rod departure detection signal is generated by the sensor S2 installed on the front end may set as a first time. A time elapsed from when the operation signal is applied to the spool driving part 15 to when a piston rod departure detection signal is generated by the sensor S 1 installed on the rear end may set as a second time. The direction change valve operates continuously over an equipment operation elapsed time. A reciprocating motion of the cylinder is performed by an operation of the direction change valve. Therefore, the data obtainer 110 may obtain data of the first time and the second time the number of times that one cylinder makes a reciprocating motion. According to the present invention, a direction change valve that is expected to fail is determined by comparing operation times of direction change valves with each other and thus a plurality of pieces of operation time data is obtained for each of the direction change valves. To this end, the data obtainer 110 may include a data collection device and a database storing data.

A plurality of pieces of operation time data are obtained for each of the direction change valves over an equipment operation elapsed time. For example, when one cylinder makes a reciprocating motion 1,800 times per hour, 3,600 pieces of data may be obtained for one hour, 10,800 pieces of data may be obtained for 3 hours, and 86,400 pieces of data may be obtained over 24 hours. When the direction change valve operates repeatedly over 30 days, 86,400×30 pieces of operation time data may be obtained. When statistical indexes are calculated using a large amount of data at once, the amount of data to be processed is extremely large. In this case, high load is applied to an algorithm or program for predicting a failure and thus a failure cannot be quickly determined. Moreover, as the number of direction change valves that are failure prediction targets increases, data throughput increases significantly and the above problem becomes more serious.

Therefore, a so-called grouping technique is used to obtain data for failure prediction and calculate a degradation index value. Grouping is one of statistical techniques for reducing the number of pieces of data, in which the amount of data to be processed is reduced by binding data in a piece of data (group) according to targets, periods, or characteristics.

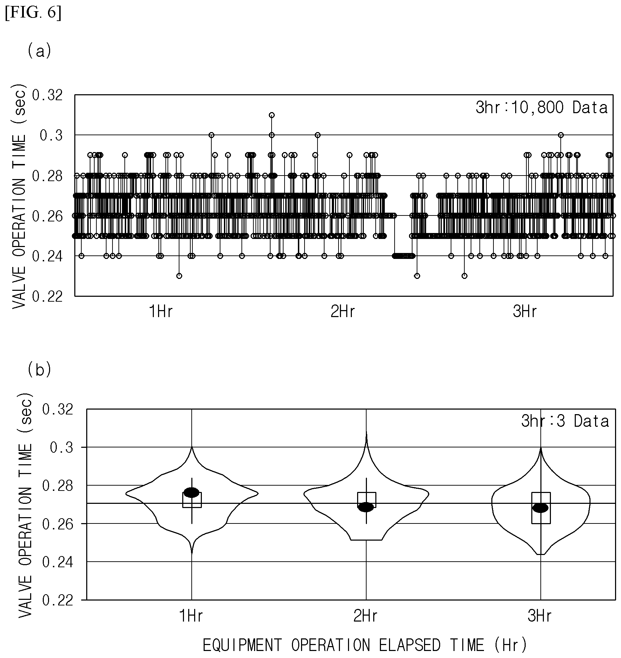

FIG. 6 is a graph showing a state in which operation time data of a direction change valve is grouped and statistically visualized. Referring to (a) of FIG. 6, the number of pieces of the operation time data of the direction change valve is 3,600 per hour and is 10,800 when the direction change valve is operated for three hours, but the operation time data is divided into three data groups as shown in (b) of FIG. 6. When overall data about an operation time of a direction change valve is shown as in (a) of FIG. 6, a tendency thereof cannot be clearly identified, but when the data is grouped and visually displayed as in (b) of FIG. 6, a change in operation time data over an equipment operation elapsed time can be grasped at a glance. In addition, when statistical indexes such as standard deviation and a first quartile are calculated on the basis of a total number of pieces of data as shown in (a) of FIG. 6, data throughput or the amount of calculation increases as described above. However, as shown in (b) of FIG. 6, standard deviation value corresponding to a total number of pieces of data may be calculated while significantly reducing data throughput by calculating statistical indexes such as standard deviation for each data group per time and calculating an average of standard deviations of three data groups.

In FIG. 6, operation time data obtained for one hour is set as one data group by setting one hour as a unit time. However, a unit time serving as a criterion for obtaining data groups by grouping may be 3 hours, 8 hours, 24 hours or more. For example, 24 hours may be defined as one unit time period, and operation time data of a direction change valve operated for unit time periods may be grouped into one data group. In this case, the one data group is a group of operation time data of one direction change valve repeatedly operated over an equipment operation lapsed time of 24 hours. In this way, multiple data groups may be obtained over a specific inspection target period such as one week, several weeks, or a month. For example, in order to predict a failure of direction change valves operated in a factory for 30 days, the data obtainer may obtain thirty data groups for each of the direction change valves when the data groups are obtained by setting one day (24 hours) to a unit time period.

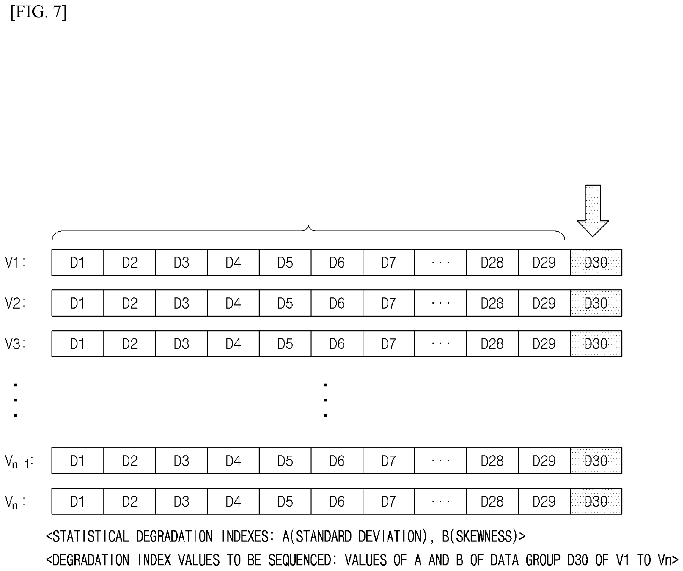

FIG. 7 is a schematic diagram illustrating a failure prediction mechanism using a direction change valve failure prediction system 100 according to an embodiment of the present invention.

The drawing illustrates that operation time data groups are obtained for a total of n direction change valves V1 to Vn when an inspection target period is set to 30 days. That is, in this case, when one day (24 hours) is set to a unit time period and an inspection target period (30 days) consists of 30 unit time periods, operation time data of each direction change valve is grouped into an operation time data group. Therefore, 30 operation time data groups are obtained for each individual direction change valve, e.g., the direction change valve V1, and are collected and stored by the data obtainer.

Referring back to FIG. 5, the direction change valve failure prediction system 100 of the present invention includes the degradation index value calculator 120 that calculates degradation index values of a plurality of statistical degradation indexes representing a failure of a direction change valve on the basis of the operation time data.

The statistical degradation indexes include, but are not limited to, a mean, standard deviation, skewness, kurtosis, a first quartile, a median, a third quartile, a change in skewness, a change in kurtosis, etc. of operation time data of each direction change valve. Even when a plurality of direction change valves operate for the same time, a tendency of direction change valves showing failure signs may vary according to various causes. It is possible to select a direction change valve that relatively deteriorates by measuring statistical degradation indexes with respect to the direction change valves. That is, in the present invention, direction change valves are not absolutely compared with each other in terms of performance or an operation time but operation time data of the direction change valves and statistical degradation indexes based on the operation time data are compared to determine a direction change valve that is likely to fail as a direction change valve that is expected to fail. For example, when an operation time of a predetermined direction change valve is longer than an average operation time, the performance of the direction change valve may deteriorate and is likely to be determined as a direction change valve that is expected to fail. In addition, when other statistical degradation indexes, such as standard deviation, skewness, and kurtosis of the operation time data, of a predetermined direction change valve are different from those of the other direction change valves, the direction change valve is likely to be determined as a direction change valve that is expected to fail.

Among the above-described statistical degradation indexes, the standard deviation is a characteristic value representing a dispersion of data with respect to the mean. The first quartile is a value at a 1/4 position from a lowest portion of the data when the data is arranged from a lower value to a higher value and divided into quarters. The median and the third quartiles are respectively values at a 1/2 position and a 3/4 position from the lowest portion of the data when the data are arranged from the lower value to the higher value and divided into quarters.

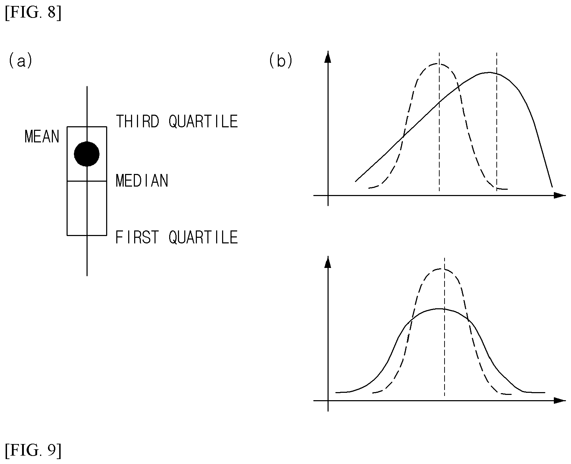

FIG. 8 is a schematic diagram illustrating examples of statistical degradation indexes based on an operation time of a direction change valve. (a) of FIG. 8 illustrates a relationship between the third quartile, the median, the first quartile, and the mean described above. Skewness is an index representing the asymmetry of data with respect to a normal distribution curve as shown in an upper graph of FIG. 8b, and kurtosis is a measure representing the height of data with respect to a normal distribution curve as shown in a lower graph of FIG. 8b. Degradation index values of the statistical degradation indexes described above may be digitized and calculated by a predetermined computing program, based on operation time data of each direction change valve. An operation time of a direction change valve is a factor reflecting or representing the degradation, failure, or failure sign of the direction change valve and thus the statistical degradation indexes calculated based on the operation time may also represent a failure of the direction change valve. A degradation index value calculator of the present invention includes a predetermined computing program and thus is capable of calculating degradation index values of statistical degradation indexes of an individual direction change valve for each operation time data group in each unit time period as shown in FIG. 7.

Meanwhile, in the present invention, a direction change valve that is expected to fail is determined using at least a plurality of statistical degradation indexes. Although there is a large amount of data serving as a basis for failure determination, a probability of failure prediction may inevitably decrease when a failure determination is performed by a comparison only in terms of one statistical degradation index. Therefore, degradation index values are calculated by selecting two or more statistical degradation indexes from among statistical degradation indexes based on operation time data. When statistical degradation indexes are selected, it is recommended to select indexes with different statistical characteristics as much as possible. For example, the accuracy of failure prediction may be further increased by selecting at least one from among indexes indicating quantitative changes in data, such as a mean, standard deviation, a first quartile, a median, and a third quartile, and selecting at least one from among indexes indicating asymmetry or changes in data, such as skewness and kurtosis.

Referring back to FIG. 5, the present invention includes the determiner 130 for determining a direction change valve that is expected to fail, based on the degradation index values of the statistical degradation indexes. The determiner 130 sequences the degradation index values of the statistical degradation indexes, which are calculated for each of direction change valves, according to size to compare the direction change valves with each other. In addition, scores are given to direction change valves of higher values that are within or beyond a predetermined range among the sequenced degradation index values, and a direction change valve that is expected to fail is determined on the basis of the sum of the scores.

For example, standard deviations and skewness values of operation time data of a plurality of target direction change valves operated over the same equipment operation elapsed time may be calculated for each of the direction change valves and be sequenced. For example, a score '1' may be given to standard deviations and skewness values of direction change valves that are higher values among the sequenced standard deviations and skewness values, and a direction change valve with both standard deviation and a skewness value to which the score '1' is given, i.e., a direction change valve with a score '2', may be determined as a direction change valve that is expected to fail. However, the above description is only an example, and specific determination conditions such as types of statistical degradation indexes to be selected, a criteria for selecting higher values, and scores may be variously selected and determined in consideration of various causes such as characteristics of a direction change valve to be evaluated, equipment operating conditions, and factory operating conditions. That is, details of a failure prediction algorithm may be adjusted by the determiner.

Referring back to FIG. 7, the determiner 130 may determine a direction change valve that is expected to fail, based on statistical degradation indexes of 30 operation time data groups obtained for each of multiple (n) direction change valves V1 to Vn. In this case, a direction change valve that is expected to fail may be determined by sequencing degradation index values of statistical degradation indexes calculated on the basis of all pieces of operation time data of each direction change valve for entire 30 days, which is an inspection target period, and giving scores thereto.

However, in this case, as described above, the amount of data to be processed increases exponentially, causing excessive load on the system and making it difficult to perform calculation quickly. In addition, comparing all the pieces of the operation time data of each direction change valve in the entire 30 days with each other is not only inefficient but also may decrease the reliability of failure prediction. That is, it is common that a failure of a direction change valve occurs after repetitive use of the direction change valve for a predetermined time period. Therefore, it is inefficient to determine a direction change valve that is expected to fail using degradation index values calculated on the basis of an operation time data group belonging to an initial unit time period of an inspection target period, because the possibility of failure occurrence is not high. It is reasonable to determine a direction change valve that is expected to fail, based on pieces of operation time data of each direction change valve operated for a specific (unit) time period after an operation of each direction change valve for a predetermined period or predetermined unit time periods. That is, as shown in FIG. 7, a direction change valve that is expected to fail may be determined on the basis of operating time data of direction change valves operated on, for example, a 30^{th} day after operation of the direction change valves for 29 days. In this case, because all the direction change valves were used for the same period (29 days), the tendency of degradation of the direction change valves becomes clear, and therefore, a degree of degradation of or the possibility of failure of each of the direction change valves will be clearly identified by comparing degradation index values calculated on the 30^{th} day that is a last period (hereinafter referred to as last-period degradation index values) with each other. In this respect, as shown in FIG. 5, the data obtainer 110 of the direction change valve failure prediction system 100 of the present embodiment may obtain last-period data after the use of the direction change valves for at least a predetermined time period among a plurality of unit time periods, the degradation index value calculator 120 may calculate last-period degradation indexes on the basis of the last-period data (group), and the determiner 130 may sequence the last-period degradation index values for each of the direction change valves and determine a direction change valve that is expected to fail. However, in the present invention, the terms "last period" and "last-period degradation index value" should not be understood as being limited to a last unit time period (e.g., the unit time period of the 30^{th} day in FIG. 7) after repetitive use of direction change valves for a predetermined period and degradation index values calculated based on an operation time data group D30 in the last unit time period, respectively. Referring to FIG. 7, for example, degradation index values may be calculated based on an operation time data group D28, D29, or D30 after the operation of the direction change valve for 27 days. In this case, a day selected from among the 28^{th} day, the 29^{th} day, and the 30^{th} day may be a last period, and a degradation index value calculated based on a data group on the selected day may be a last-period degradation index value. That is, the "last period" in the present embodiment may be a specific time period or a specific unit time period after the use (operation) of direction change valves for a predetermined period or a predetermined unit time period and should not be necessarily limited to a final unit time period immediately after the use of the direction change valves for the period. The "period" in which the direction change valves are used may be freely selected according to the purpose of inspection or failure prediction or characteristics of the direction change valves. Although it is assumed in FIG. 7 that the direction change valves are used for 29 days, a failure of the direction change valves may be predicted after use of the direction change valves for a period longer or shorter than 29 days.

In addition, the "last period" should not be necessarily limited to a single unit time period.

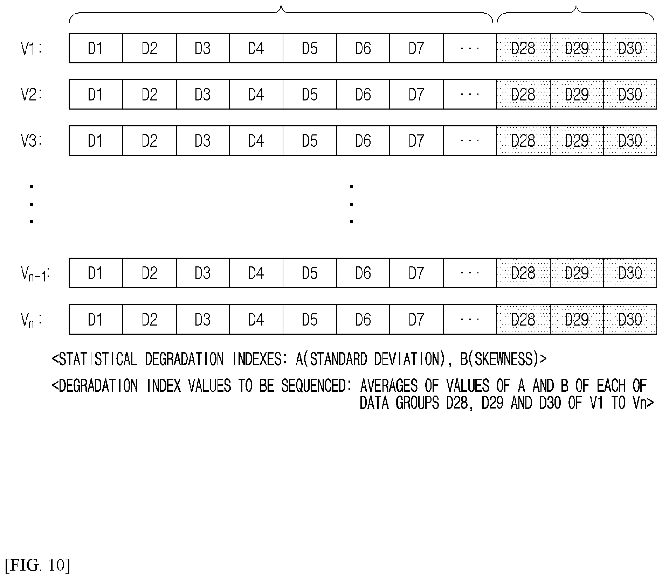

FIG. 9 is a schematic diagram illustrating a failure prediction mechanism using a direction change valve failure prediction system according to a modified example of an embodiment of the present invention. Referring to FIG. 9, averages of last-period degradation index values calculated on the basis of operation time data groups D28, D29, and D30 obtained on the 28^{th} day, the 29^{th} day, and the 30^{th} day after the operation of direction change valves for 27 days are calculated and employed as degradation index values for determination of a direction change valve that is expected to fail. Therefore, strictly speaking, in the example of FIG. 9, a last period is three days and degradation index values for failure prediction are average last-period degradation index values calculated by averaging degradation index values calculated on the basis of operation time data groups for the three days. As shown in FIG. 7, it may be advantageous to predict a failure using average last-period degradation index values calculated on the basis of a plurality of unit time periods or operation time data groups in terms of the reliability of statistical or mathematical data rather than using last-period degradation index values calculated on the basis of a single unit time period or a single operation time data group.

FIG. 7 illustrates a process of selecting standard deviation A and skewness B as statistical degradation indexes with respect to an operation time data group obtained on the basis of operation time data of a direction change valve on a 30^{th} day after the use (operation) of the direction change valve for 29 days, and calculating degradation index values of the standard deviation A and the skewness B with respect to each direction change valve. In this case, D30 denotes an operation time data group of a direction change valve operated for 24 hours on the 30^{th} day, and 86,400 pieces of data are grouped into the operation time data group as described above. Based on the operation time data group D30, standard deviations and skewness values may be calculated for each direction change valve and be sequenced.

The example of FIG. 9 shows a process of selecting standard deviation A and skewness B as statistical degradation indexes with respect to operation time data groups D28, D29, and D30 obtained based on operation time data of a direction change valve on 28^{th}, 29^{th} and 30^{th} days after the use (operation) of the direction change valve for 27 days, and calculating average last-period degradation index values by averaging standard deviations and skewness values calculated for each operation time data group with respect to each direction change valve. The average last-period degradation index values may be sequenced for each direction change valve, scores may be given to direction change valves of higher values that are within or beyond a predetermined range, and a direction change valve that is expected to fail may be determined on the basis of the sum of the scores.

A specific example of determining a direction change valve that is expected to fail on the basis of the failure prediction mechanism of FIGS. 5 and 7 will be described below.

Table 1 below shows a result of selecting skewness, kurtosis, a first quartile, a third quartile, and standard deviation as five statistical degradation indexes, calculating last-period degradation index values on a 30^{th} day with respect to 29 direction change valves operated for 29 days, and sequencing the last-period degradation index values.

Table 2 shows that a score '1' was given to direction change valves of the top 25% (seventh rank) or higher of the sequenced last-period degradation indexes.

**[Table 1]**

| Sequencing of Degradation Index Values | | | | | | |
|---|---|---|---|---|---|---|
| | Valve 1 | Valve 2 | Valve 3 | ... | Valve 28 | Valve 29 |
| Skewness | 1 | 24 | 6 | ... | 2 | 27 |
| Kurtosis | 10 | 12 | 11 | ... | 20 | 6 |
| First quartile | 10 | 3 | 21 | ... | 11 | 13 |
| Third quartile | 15 | 21 | 9 | ... | 17 | 25 |
| Standard deviation | 7 | 5 | 10 | ... | 8 | 24 |

**[Table 2]**

| Giving of Score to Higher Values | | | | | | |
|---|---|---|---|---|---|---|
| | Valve 1 | Valve 2 | Valve 3 | ... | Valve 28 | Valve 29 |
| Skewness | 1 | 0 | 1 | ... | 1 | 0 |
| Kurtosis | 0 | 0 | 0 | ... | 0 | 1 |
| First quartile | 0 | 1 | 0 | ... | 0 | 0 |
| Third quartile | 0 | 0 | 0 | ... | 0 | 0 |
| Standard deviation | 1 | 1 | 0 | ... | 0 | 0 |

In Table 2, direction change valves to which the sum of the scores is 2 points or more were determined as direction change valves that are expected to fail. In this case, direction change valves 1 and 2 were determined as direction change valves that are expected to fail. Therefore, these direction change valves are likely to fail and thus need be inspected.

In the above example, a score '1' was given to the top 25%, and a direction change valve with the sum of scores of 2 or higher was determined as a direction change valve that is expected to fail. However, a percentage of higher values, a score to be given, and the sum of scores, which is a criterion for determination of a direction change valve that is expected to fail, may be changed. Therefore, even when a failure of a direction change valve is predicted using a failure prediction system of the present invention, failure prediction algorithms may be derived for a large number of cases. Importantly, according to the present invention, a plurality of statistical degradation indexes may be selected on the basis of a plurality of pieces of operation time data, degradation index values may be derived from the plurality of statistical degradation indexes, the degradation index values may be sequenced, and a direction change valve that is expected to fail may be determined on the basis of the sum of scores. Therefore, details of a failure prediction algorithm may be changed to increase statistical reliability within the scope of the failure prediction system or method described above.

### (Second Embodiment)

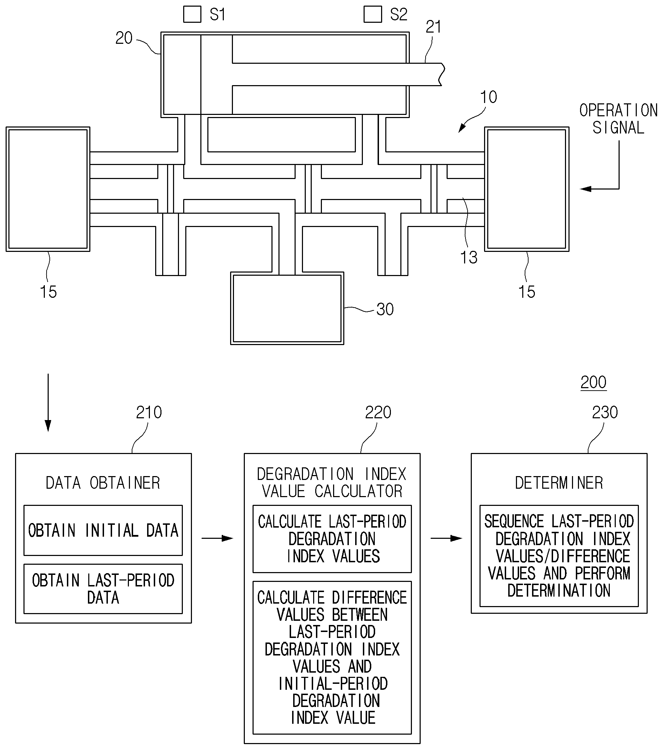

FIG. 10 is a schematic view of a direction change valve failure prediction system 200 according to another embodiment of the present invention.

The present embodiment is different from the first embodiment in that, for example, a change value of a mean, a change value of skewness, and a change value of kurtosis are employed as additional statistical degradation indexes, in addition to individual statistical indexes such as standard deviation, skewness, and kurtosis.

That is, a rate of change of the mean, a rate of change of skewness, and a rate of change of kurtosis are closely related to degradation of a direction change valve, as well as among degradation index values for determination of a direction change valve that is expected to fail. Therefore, the reliability of failure prediction can be further improved by calculating degradation index values from such change values of the statistical degradation indexes as new statistical degradation indexes, in addition to the existing statistical degradation indexes.

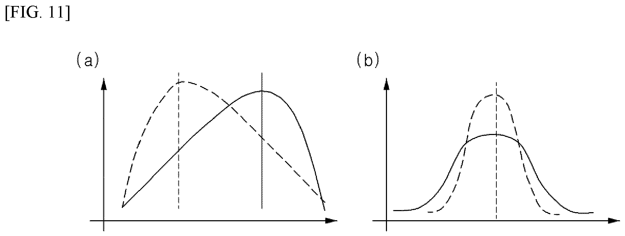

FIG. 11 is a schematic diagram illustrating a change in such statistical degradation indexes. (a) of FIG. 11 illustrates a change in skewness. (b) of FIG. 11 illustrates a change in kurtosis. In the present embodiment, in order to select a plurality of statistical degradation indexes for failure prediction, at least one (e.g., standard deviation) of general statistical degradation indexes may be selected, and at least one of change values of the statistical degradation indexes (e.g., a change value of skewness) may be selected as a new statistical degradation index.

To add the change value of the statistical degradation index as a new statistical degradation index, values before and after a change of the degradation index should be identified. To this end, the data obtainer 210 of the failure prediction system 200 of the present embodiment should obtain at least both initial operation time data and last-period operation time data of each direction change valve.

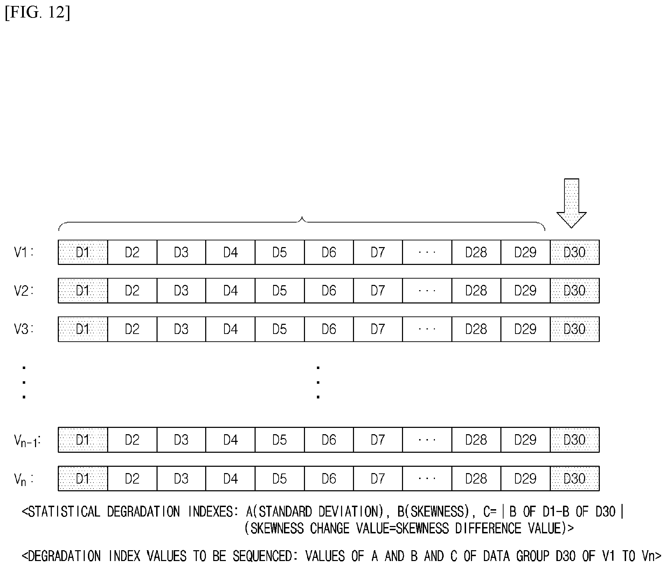

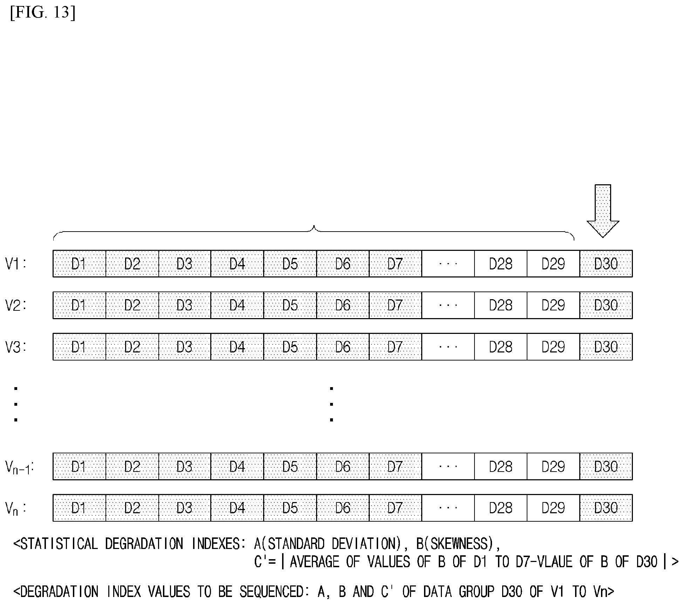

FIGS. 12 and 13 are schematic diagrams illustrating failure prediction mechanisms using the direction change valve failure prediction system of the embodiment of FIG. 10.

As shown in FIG. 12, statistical degradation indexes, e.g., standard deviation A and skewness B, may be selected on the basis of an operation time data group D1 on a first day, which is an initial period, of an inspection target period of 30 days, and degradation index values thereof may be calculated. Statistical degradation indexes, e.g., standard deviation A and skewness B, may be selected on the basis of an operation time data group D30 on the 30^{th} day, which is a last period, after use of the direction change valve for 29 days, and degradation index values thereof may be calculated. In addition, a skewness value based on the data group D1 and a skewness value based on the data group D30 may be calculated, the difference between the skewness values may be set as a skewness change value C, and the skewness change value C may be used as a new statistical degradation index together with the degradation indexes such as the standard deviation and skewness.

That is, according to FIGS. 10 and 12, three parameters, i.e., standard deviation A and skewness B on a 30^{th} day that is a last period and a skewness change value C that is the difference between skewness values on the first day and the 30^{th} day, are set as degradation index values and are calculated by a degradation index value calculator 220. A determiner 230 may sequence the three degradation index values, give scores to direction change valves of higher values that are within or beyond a predetermined range among the sequenced values, and determine a direction change valve that is expected to fail on the basis of the sum of the scores.

Meanwhile, an initial data group serving as a basis for calculation of change values of statistical degradation indexes or initial statistical degradation index values calculated on the basis of the initial data group are not limited to a single unit time period or an initial statistical degradation index value calculated on the basis of the single unit time period.

Referring to FIG. 13, for example, operation time data groups D1 to D7 in seven unit time periods, e.g., a first day to a seventh day, of a week may be used as basic data for calculating an initial degradation index value. In this case, the initial degradation index value is an average of initial degradation index values calculated by calculating degradation indexes (e.g., a mean and skewness) for each of the data groups D1 to D7 and averaging the degradation indexes. In addition, last-period degradation index values (a mean, standard deviation A, and skewness B) on a 30^{th} day after use of direction change valves for 29 days may be calculated, and difference values (e.g., a change value of the mean or a skewness change value C') obtained by subtracting the last-period degradation index values from the average of the initial degradation index values may be employed as additional statistical degradation indexes.

In this case, as shown in FIG. 9, not only last-period degradation index values based on a single unit time period but also average last-period degradation index values based on a plurality of operation time data groups in a plurality of unit time periods may be employed as the last-period degradation index values serving as bases for calculation of the difference values. Therefore, a difference value calculated by subtracting a last-period degradation index value or an average last-period degradation index value from either an initial degradation index value for an operation time data group of an initial unit time period of an inspection target period or an average of initial degradation index values calculated for operation time data groups of initial unit time periods may be employed as an additional statistical degradation index representing a failure of a direction change valve.

A specific example of determining a direction change valve that is expected to fail on the basis of the failure prediction mechanism of FIGS. 10 and 13 will be described below.

As in one example in the first embodiment, skewness, kurtosis, a first quartile, a third quartile, and standard deviation are selected as five statistical degradation indexes, and last-period degradation index values on a 30^{th} day with respect to 29 direction change valves operated for 29 days are calculated and sequenced.

Meanwhile, in the present example, averages of skewness, kurtosis, and means in initial unit time periods of seven days are calculated as initial degradation index values, the differences (absolute values) between the initial degradation index values and skewness, kurtosis, and a mean (last-period index values) on the 30^{th} day are calculated, a change value of the skewness, a change value of the kurtosis, and a change value of the mean are set as new statistical degradation indexes and sequenced together with the five statistical degradation indexes, and a result of sequencing them is shown in Table 3.

Table 4 shows that a score '1' was given to direction change valves of the top 25% (seventh rank) or higher of a total of eight sequenced last-period degradation index values, including the difference values.

**[Table 3]**

| Sequencing of Degradation Index Values | | | | | | |
|---|---|---|---|---|---|---|
| | Valve 1 | Valve 2 | Valve 3 | ... | Valve 28 | Valve 29 |
| Skewness | 1 | 24 | 6 | ... | 2 | 27 |
| Kurtosis | 10 | 12 | 11 | ... | 20 | 6 |
| Standard deviation | 7 | 5 | 10 | ... | 8 | 24 |
| First quartile | 10 | 3 | 21 | ... | 11 | 13 |
| Third quartile | 15 | 21 | 9 | ... | 17 | 25 |
| Change of skewness | 7 | 25 | 11 | ... | 21 | 4 |
| Change of kurtosis | 2 | 27 | 29 | ... | 19 | 9 |
| Change of mean | 19 | 28 | 20 | ... | 12 | 8 |

**[Table 4]**

| Giving of Score to Higher Value | | | | | | |
|---|---|---|---|---|---|---|
| | Valve 1 | Valve 2 | Valve 3 | ... | Valve 28 | Valve 29 |
| Skewness | 1 | 0 | 1 | ... | 1 | 0 |
| Kurtosis | 0 | 0 | 0 | ... | 0 | 1 |
| First quartile | 0 | 1 | 0 | ... | 0 | 0 |
| Third quartile | 0 | 0 | 0 | ... | 0 | 0 |
| Standard deviation | 1 | 1 | 0 | ... | 0 | 0 |
| Change of skewness | 1 | 0 | 0 | ... | 0 | 1 |
| Change of kurtosis | 1 | 0 | 0 | ... | 0 | 0 |
| Change of mean | 0 | 0 | 0 | ... | 0 | 0 |

In Table 4, a direction change valve with the sum of the scores of 3 or more was determined as a direction change valve that is expected to fail. In this case, the direction change valve 1 was determined as a direction change valve that is expected to fail. Therefore, the direction change valve is likely to fail and thus need be inspected.

As described above, each of the data obtainers 110 and 210 of the failure prediction systems 100 and 200 of the present invention may include a data collection device and a database storing data. The data obtainers 110 and 210 may include a predetermined statistical program for grouping data into groups. The degradation index value calculators 120 and 220 may include a predetermined computing program to calculate selected statistical degradation indexes or the differences between the statistical degradation indexes. The determiners 130 and 230 may include a data reading device, an analysis device, an operation device, etc. to sequence the calculated degradation index values, give scores, calculate the sum of the scores, and determine a direction change valve that is expected to fail. Alternatively, the data obtainers 110 and 210, the degradation index value calculators 120 and 220, and the determiners 130 and 230 may be computing devices implemented by controlling hardware, including an operation device such as a CPU and a storage device such as a hard disk, by predetermined software, and are configured to communicate with one another.

The present invention also provides a direction change valve failure prediction method using the direction change valve failure prediction system described above.

Specifically, the direction change valve failure prediction method may include: obtaining a plurality of pieces of operation time data for each of a plurality of direction change valves, which communicate with a cylinder including a piston rod to supply a fluid to the cylinder and change a direction in which the fluid is supplied to change an operation direction of the piston rod, by repeatedly detecting operation times of the plurality of direction change valves over an equipment operation elapsed time; selecting a plurality of statistical degradation indexes representing a failure of the direction change valves and calculating index values of the selected statistical degradation indexes on the basis of the operation time data; sequencing the degradation index values according to size with respect to each of the direction change valves; and giving scores to direction change valves of higher values that are within or beyond a predetermined range among the sequenced degradation index values and determining a direction change valve that is expected to fail on the basis of the sum of the scores.

In the obtaining of the plurality of pieces of operation time data, a first time required for the piston rod to start moving forward according to an operation signal of the direction change valve, a second time required for the piston rod to start moving backward according to an operation signal of the direction change valve, or the sum of the first time and the second time may be obtained as operation time data. In this case, in order to reduce data throughput, when an inspection target period consists of a plurality of unit time periods, the operation time data of each of the direction change valves in the unit time periods may be grouped into an individual operation time data group.

Thereafter, a plurality of statistical degradation indexes representing a failure of the direction change valve are selected on the basis of the operation time data. Examples of the statistical degradation indexes may include a mean, standard deviation, a first quartile, a median, a third quartile, skewness, kurtosis, etc. of pieces of operation time data of each of the direction change valves. When the statistical degradation indexes are selected, degradation index values thereof are calculated. In this case, when the operation time data is grouped into individual operation time data groups as described above, degradation index values of each of the direction change valve may be calculated for each of the operation time data groups.

Next, the calculated degradation index values are sequenced according to size with respect to each of the direction change valves. A direction change valve of higher values among the sequenced degradation index values is likely to be a direction change valve that is expected to fail.

Thereafter, scores are given to direction change valves of higher values that are within or beyond the predetermined range among the sequenced degradation index values, and a direction change valve that is expected to fail is determined on the basis of the sum of the scores.

The degradation index values serving as a basis of determination of a direction change valve that is expected to fail are preferably calculated on the basis of operation time data in a specific time period after repetitive use of the direction change valve for a predetermined period. In this case, when an inspection target period consists of a plurality of unit time periods, either last-period degradation index values calculated for an operation time data group in a specific unit time period after an operation of the direction change valve for predetermined unit time periods of the inspection target period or averages of last-period degradation index values for operation time data groups in specific unit time periods may be sequenced and used as a basis for determination of a direction change valve that is expected to fail.

Meanwhile, a change value of at least one statistical degradation index selected from among the plurality of statistical degradation indexes may be employed as an additional statistical degradation index for determination of a direction change valve that is expected to fail. In this case, in order to calculate the change value, a difference value calculated by subtracting the last-period degradation index value or the average of the last-period degradation index values from an initial degradation index value calculated for an initial unit time period of the inspection target period or the operation time data group or an average of initial degradation index values calculated for initial unit time periods of the inspection target period or the operation time data groups may be employed as a change value of the statistical degradation index.

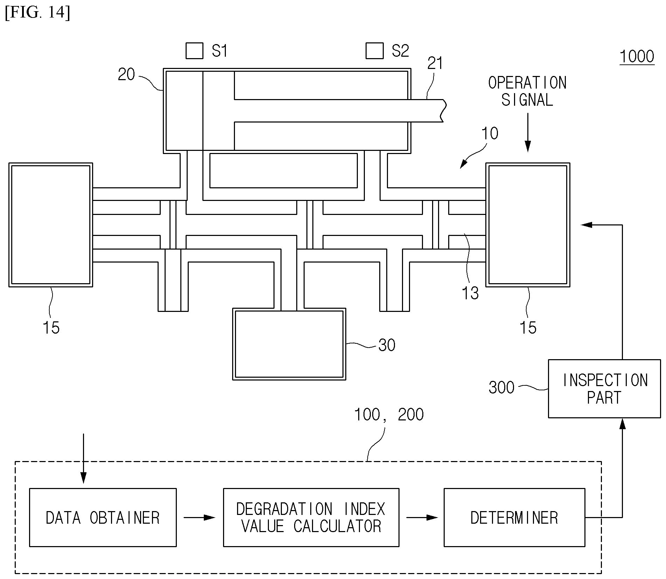

FIG. 14 is a schematic view of a direction change valve failure inspection system 1000 according to an embodiment of the present invention.

As shown in FIG. 14, the direction change valve failure inspection system 1000 includes direction change valve failure prediction systems 100 and 200 of the present invention that include data obtainers 110 and 210, degradation index value calculators 120 and 220, and determiners 130 and 230. The direction change valve failure inspection system 1000 further includes an inspection part 300 connected to the determiners 130 and 230 of the direction change valve failure prediction systems 100 and 200 to measure whether air leaks from a direction change valve determined as a direction change valve that is expected to fail by the determiners 130 and 230.

The inspection part 300 may be, for example, an ultrasonic sound camera. The ultrasonic sound camera is an industrial camera capable of photographing a gas leakage and an electric arc in real time by measuring ultrasonic waves that cannot be heard to human ears. Because ultrasonic energy generated at an air leakage point may be detected by a sensor array and the air leakage point may be displayed on a visible light image of an inspection target, the air leakage point may be quickly detected and stored in the form of a JPEG image or an MP4 video.

The present invention also provides a direction change valve failure inspection method that includes the direction change valve failure prediction method. The inspection method includes inspecting a direction change valve determined as a direction change valve that is expected to fail by the direction change valve failure prediction method described above, and replacing a direction change valve whose failure is detected by the inspecting of the direction change valve.

According to the present invention, when only a direction change valve determined as a direction change valve that is expected to fail is inspected by the inspection part, a direction change valve inspection time can be greatly reduced, thereby significantly reducing costs and manpower required for the direction change valve inspection.

### Examples

A direction change valve that is expected to fail was determined by a direction change valve failure prediction system of the present invention with respect to a cylinder that operates a folding unit for alternately folding two types of bi-cells including negative electrode and a positive electrode and a separator and a plurality of direction change valves coupled to the cylinder to change an operation direction of the cylinder. In addition, the number of actual failures of the direction change valves was evaluated.

In Table 5, Example 1 is a result of judging a total of 29 direction change valves while changing an evaluation date (the number of evaluations). In Table 6, Example 2 is a result of determination using an algorithm in which details of evaluation conditions (a top% selection condition, etc.) were modified and supplemented with reference to the result of the second evaluation.

### Example 1

**[Table 5]**

| Number of evaluations | First | Second |
|---|---|---|
| Total number of inspections (number) | 29 | 29 |
| Recommended rate of failures (%) | 28(8/29) | 14(4/29) |
| Actual number of failures | 3 | 3 |
| Over-detection rate (%) | 17(5/29) | 7(2/29) |
| Non-detection rate (%) | 0(0/29) | 3(1/29) |
| Detection rate (%) | 38(3/8) | 50(2/4) |

In Table 5, the over-detection rate, the non-detection rate, and the detection rate may be expressed by the following equations:
over-detection rate=(total number of recommendations-actual number of failures of total number of recommendations)/total number of inspections
non-detection rate=(total number of failures-recommended number of failures)/total number of inspections
detection rate=actual number of failures of a total number of recommendations/total number of recommendations

As shown in Table 5 above, in the second evaluation, the over-detection rate decreased but the non-detection rate and the detection rate increased, compared to the first evaluation. Accordingly, a third evaluation was conducted by changing top % selection conditions. A thorough investigation of valves recommended as fault valves in the third evaluation was conducted to take action, e.g., repairing, and a fourth evaluation was conducted using the same algorithm to perform judgement.

### Example 2

**[Table 6]**

| Number of evaluations | Third | Fourth |
|---|---|---|
| Total number of inspections (number) | 29 | 29 |
| Recommended rate of failures (%) | 24(7/29) | 21(6/29) |
| Actual number of failures | 3 | 0 |
| Over-detection rate (%) | 14(4/29) | 21(6/29) |
| Non-detection rate (%) | 0(0/29) | 0(0/29) |
| Detection rate (%) | 43(3/7) | 0(0/6) |

As shown in Table 6 above, in the third and fourth evaluations using the supplemented algorithm, the non-detection rate was 0% and the over-detection rate was 25% or less. Therefore, when failures of direction change valves are evaluated using the supplemented algorithm, the number of inspections and an inspection time decrease significantly.

The above description is only an example of the technical idea of the present invention and various modification and changes may be made by those of ordinary skill in the technical field to which the present invention pertains without departing from the essential features of the present invention. Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims and all technical ideas within the same scope as the present invention should be interpreted as being included in the scope of the present invention.

In the present specification, terms representing directions such as upper, lower, left, right, forward and backward directions are used only for convenience of description and thus it will be obvious that these terms may be changed according to a position of an object or an observer.

### (Reference Numerals)

10: direction change valve
11: port
11a: first port, 11b: second port, 11c: third port, 11d: fourth port, 11e: fifth port
111: flow path
12: case
121: internal flow path
S1, S2: sensor
100, 200: direction change valve failure prediction system
110, 210: data obtainer
120, 220: degradation index value calculator
130, 230: determiner
300: inspection part
1000: direction change valve failure inspection system

## Claims

1. A direction change valve failure prediction system comprising:
a data obtainer configured to repeatedly detect operation times of a plurality of direction change valves over an equipment operation elapsed time to obtain operation time data of each of the plurality of direction change valves, the plurality of direction change valves being configured to communicate with a cylinder including a piston rod to change a direction in which a working fluid is supplied to the cylinder to change an operation direction of the piston rod;
a degradation index value calculator configured to calculate degradation index values of a plurality of statistical degradation indexes representing a failure of the direction change valves on the basis of the operation time data; and
a determiner configured to sequence the degradation index values of the statistical degradation indexes, which are calculated for each of the plurality of direction change valves, according to size, give scores to direction change valves of higher values that are within or beyond a predetermined range among the sequenced degradation index values, and determine a direction change valve that is expected to fail on the basis of the sum of the scores.

2. The direction change valve failure prediction system of claim 1, wherein the data obtainer obtains data by selecting, as an operation time of the direction change valve, at least one of a first time required for the piston rod to start moving forward according to an operation signal of the direction change valve, a second time required for the piston rod to start moving backward according to an operation signal of the direction change valve, and the sum of the first time and the second time.

3. The direction change valve failure prediction system of claim 2, wherein the data obtainer regards each of the first time and the second time as a separate piece of independent operation time data, and obtains two pieces of operation time data of the first time and the second time during a reciprocating operation of a piston rod included in one cylinder.

4. The direction change valve failure prediction system of claim 1, wherein the statistical degradation indexes comprise two or more statistical degradation indexes selected from the group consisting of a mean, standard deviation, a first quartile, a median, a third quartile, skewness, and kurtosis of the operation time data of each of the plurality of direction change valves.

5. The direction change valve failure prediction system of claim 1, wherein the statistical degradation indexes comprise: at least one statistical degradation index selected from the group consisting of a mean, standard deviation, a first quartile, a median, a third quartile, skewness, and kurtosis of the operation time data of each of the plurality of direction change valves; and a change value of the at least one statistical degradation indexes selected from the group.

6. The direction change valve failure prediction system of claim 1, wherein the degradation index values of the statistical degradation indexes are calculated on the basis of operation time data of each of the direction change valves operated for a specific time period after repetitive use of the direction change valves a predetermined period.

7. The direction change valve failure prediction system of claim 1, wherein, in an inspection target period including a plurality of unit time periods, the data obtainer groups the operation time data of each of the direction change valves into an individual operation time data group for each of the unit time periods, and
the degradation index value calculator calculates degradation index values of each of the direction change valves on the basis of the individual operation time data group.

8. The direction change valve failure prediction system of claim 7, wherein the determiner sequences last-period degradation index values, which are calculated on the basis of an operation time data group of the direction change valves operated for a specific unit time period after predetermined unit time periods of the inspection target period, with respect to each of the plurality of direction change valves, gives scores to direction change valves of higher values that are within or beyond a predetermined range among the sequenced last-period degradation index values, and determines a direction change valve that is expected to fail on the basis of the sum of the scores.

9. The direction change valve failure prediction system of claim 7, wherein the determiner sequences average last-period degradation index values, which are obtained by averaging last-period degradation index values calculated on the basis of operation time data groups of the direction change valves operated for specific unit time periods after predetermined unit time periods of the inspection target period, with respect to each of the plurality of direction change valves, gives scores to direction change valves of higher values that are within or beyond a predetermined range among the sequenced average last-period degradation index values, and determines a direction change valve that is expected to fail on the basis of the sum of the scores.

10. The direction change valve failure prediction system of claim 8, wherein a difference value calculated by subtracting the last-period degradation index value from either an initial degradation index value calculated on the basis of an operation time data group of an initial unit time period of the inspection target period or an average of initial degradation index values calculated on the basis of operation time data groups of initial unit time periods is employed as an additional statistical degradation index representing a failure of a direction change valve.

11. The direction change valve failure prediction system of claim 9, wherein difference values calculated by subtracting the average last-period degradation index values from either an initial degradation index value calculated on the basis of an operation time data group of an initial unit time period of the inspection target period or an average of initial degradation index values calculated on the basis of operation time data groups in initial unit time periods are employed as additional statistical degradation indexes representing a failure of a direction change valve.

12. A direction change valve failure inspection system comprising:
the direction change valve failure prediction system of claim 1; and
an inspection part configured to measure whether air leaks from a direction change valve determined by the determiner as a direction change valve that is expected to fail.

13. A direction change valve failure prediction method comprising:
obtaining operation time data of each of a plurality of direction change valves by repeatedly detecting operation times of the plurality of direction change valves over an equipment operation elapsed time, the plurality of direction change valves being configured to communicate with a cylinder including a piston rod to change a direction in which a working fluid is supplied to the cylinder to change an operation direction of the piston rod;
selecting a plurality of statistical degradation indexes representing a failure of the direction change valves and calculating degradation index values of the selected statistical degradation indexes on the basis of the operation time data;
sequencing the degradation index values according to size with respect to each of the plurality of direction change valves; and
giving scores to direction change valves of higher values that are within or beyond a predetermined range among the sequenced degradation index values, and determining a direction change valve that is expected to fail on the basis of the sum of the scores.

14. The direction change valve failure prediction method of claim 13, wherein a change value of at least one statistical degradation index selected from among the plurality of statistical degradation indexes is employed as an additional statistical degradation index for determination of a direction change valve that is expected to fail.

15. A direction change valve failure inspection method comprising:
inspecting a direction change valve determined as a direction change valve that is expected to fail by the direction change valve failure prediction method of claim 13; and
replacing the direction change valve whose failure is detected by the inspecting of the direction change valve.
